# EUROPÄISCHE PATENTSCHRIFT

(11) **EP 1 584 744 B1**
(45) Veröffentlichungstag und Bekanntmachung des Hinweises auf die Patenterteilung: **31.03.2010**
(21) Anmeldenummer: 05105397.3
(22) Anmeldetag: 19.10.2002
(51) Int. Cl.: D21G 1/00, F16F 15/02

(54) **Verfahren zur Verminderung von Schwingungen an rotierenden Bauteilen einer Bearbeitungsmaschine**
Method for reducing vibrations in rotating components
Procédé pour réduire des vibrations sur des composants en rotation

(30) Priorität: 01.02.2002 DE 10204322; 02.07.2002 DE 10229708
(43) Veröffentlichungstag der Anmeldung: 12.10.2005
(62) Teilanmeldung aus: 02782733.6
(73) Patentinhaber: Koenig & Bauer Aktiengesellschaft, 97080 Würzburg (DE)
(72) Erfinder: Bolza-Schünemann, Claus, 97082 Würzburg (DE)
(74) Vertreter: Hoffmann, Thomas

(56) Entgegenhaltungen:
- EP-A- 0 319 886
- EP-A- 0 419 826
- WO-A-97/03832
- DE-A- 10 022 151
- DE-A- 19 652 769
- US-A- 3 347 157
- US-A- 5 961 899
- PATENT ABSTRACTS OF JAPAN Bd. 017, Nr. 002 (M-1348), 5. Januar 1993 (1993-01-05) & JP 04 236819 A (EBARA CORP), 25. August 1992 (1992-08-25)

## Beschreibung

Die Erfindung betrifft ein Verfahren zur Verminderung unerwünschter Biegeschwingungen an mindestens einem rotierenden Bauteil einer Bearbeitungsmaschine gemäß dem Oberbegriff des Anspruchs 1.

DE-A-196 52 769 zeigt die Merkmale des Oberbegriffs von Anspruch 1.

Durch die EP 0 956 950 A1 ist ein Verfahren und eine Vorrichtung zum aktiven Unterdrücken von Schwingungen bekannt, wobei Ausgleichskräfte in Abhängigkeit von den gemessenen Kräften z. B. auf Walzen aufgebracht werden. Die Frequenz für die Beaufschlagung der Kraft wird laufend u. a. aus der aktuellen Drehzahl bestimmt, die Phase und Amplitude aus Messungen von Wegsignalen eines Abstandssensors.

Die EP 0 331 870 A2 offenbart eine Einrichtung zum Lagern von Zylindern, wobei Zapfen eines Zylinders in zwei in axialer Richtung des Zylinders nebeneinander angeordneten Lagern gelagert sind. Mittels Druckmittelzylindern können die Lager einzeln senkrecht zur Rotationsachse bewegt werden um beispielsweise eine Durchbiegung zu kompensieren.

In der WO 01/50035 A1 wird ein Verfahren zur Kompensation von Schwingungen rotierender Bauteile offenbart, wobei in ein Aktuator im Bereich einer Mantelfläche des rotierenden Bauteils angeordnet ist, und bei einer Aktivierung in Abhängigkeit von der Drehwinkellage des rotierenden Bauteils der Schwingung mit eine Kraftkomponente in axialer Richtung entgegenwirkt.

Die JP 4-236819 A beschreibt ein System zur Reduktion von Biegeschwingungen an einer Welle, wobei eine mit der Welle verbundene rotierende Scheibe durch Piezoelemente über Elektromagnete in Abhängigkeit von Meßwerten mit Kräften beaufschlagt wird.

Die WO 97/03832 A1 zeigt in ihrer Abhandlung zum Stand der Technik verschiedene Wege auf, durch welche eine Durchbiegung oder eine Biegeschwingung an Presseuren statische vermindert werden kann. Sie schlägt als dynamische Lösung vor, auftretende Schwingungen zu messen, und diese Meßwerte zur Regelung und Ansteuerung von Aktuatoren heranzuziehen.

Die DE 199 30 600 A1 offenbart ein Verfahren zur Verminderung unerwünschter Biegeschwingungen an einem rotierenden Bauteil einer Streicheinrichtung mit einem Aktuator, wobei der Aktuator auf einen Lagerzapfen wirkt.

Der Erfindung liegt die Aufgabe zugrunde, ein Verfahren zur Verminderung unerwünschter Biegeschwingungen an mindestens einem rotierenden Bauteil einer Bearbeitungsmaschine zu schaffen.

Die Aufgabe wird erfindungsgemäß durch die Merkmale des Anspruchs 1 gelöst.

Die mit der Erfindung erzielbaren Vorteile bestehen insbesondere darin, dass mit geringem Aufwand eine Möglichkeit geschaffen wurde, Schwingungen wirksam zu vermindern. Die Verminderung der Schwingung kann während der laufenden Produktion aktiv erfolgen.

Die Korrelation der zu ergreifenden Gegenmaßnahme mit der Drehwinkellage ist von besonderem Vorteil, da hiermit beispielsweise vielen der periodisch wiederkehrenden Störungen, wie z. B. Unsymmetrien, Oberflächenfehler, Kanäle und andere Unterbrechungen an der Mantelfläche, Unwucht, entsprochen wird.

Die Verfahrensweise ermöglicht ein Entgegenwirken einer Anregung bzw. Schwingung im Moment des Entstehens, ohne dass zunächst eine negative Auswirkung festgestellt und verarbeitet wird, bevor eine zweckmäßige Maßnahme ergriffen wird. Sowohl der auf den Drehwinkel bezogene Verlauf der Maßnahme als auch deren Größe ist in bevorzugter Ausführung vorgehalten.

Eine kontinuierliche Messung und Weiterverarbeitung von Daten zu Schwingungen oder Verformungen kann entfallen.

Besonders wenn zwei oder mehr Zylinder zusammen wirken - wie. z. B. bei Druckeinheiten für den sog. "Gummi-gegen-Gummi-Druck" - und ein oder mehrere der Zylinder Störungen an ihren Mantelflächen oder Unwuchten (Unsymmetrien) aufweisen, wirkt die Verfahrensweise dem Entstehen von Schwingungen bereits entgegen und hilft somit "ein Aufschaukeln" des gesamten Systems zu vermeiden.

Ausführungsbeispiele der Erfindung sind in den Zeichnungen dargestellt und werden im folgenden näher beschrieben. Es zeigen:
- Fig. 1: ein ersten Ausführungsbeispiel für das Verfahren und die Vorrichtung zur Verminderung von Schwingungen;
- Fig. 2: exemplarische Verläufe einer Abhängigkeit eines Signals für einen Aktuator von einer Drehwinkellage eines Zylinders (a: diskret; b: stetig);
- Fig. 3: ein zweites Ausführungsbeispiel für das Verfahren und die Vorrichtung;
- Fig. 4: eine Ausführungsvariante für das zweite Ausführungsbeispiel;
- Fig. 5: Ausführungsbeispiele a), b) für das Verfahren und die Vorrichtung an einer Druckeinheit mit vier Zylindern.

Ein rotierendes Bauteil 01, z. B. ein Zylinder 01 oder eine Walze 01 einer Bearbeitungsmaschine, insbesondere einer Rotationsdruckmaschine, z. B. für bahnförmiges Gut, ist zwischen zwei Seitengestellen 02; 03 drehbar gelagert. Hierzu weist der Zylinder 01 z. B. jeweils stirnseitig in Lagern 04; 06 gelagerte Zapfen 07; 08 auf. Der Zylinder 01 weist z. B. eine Länge von 1350 bis 1550 mm und einen Durchmesser von z. B. 450 bis 700, insbesondere von 500 bis 600 mm auf. Der Zylinder 01 weist z. B. ein Verhältnis zwischen Länge L01 und Durchmesser D01 von 6 bis 12, insbesondere zwischen 7 und 11 auf.

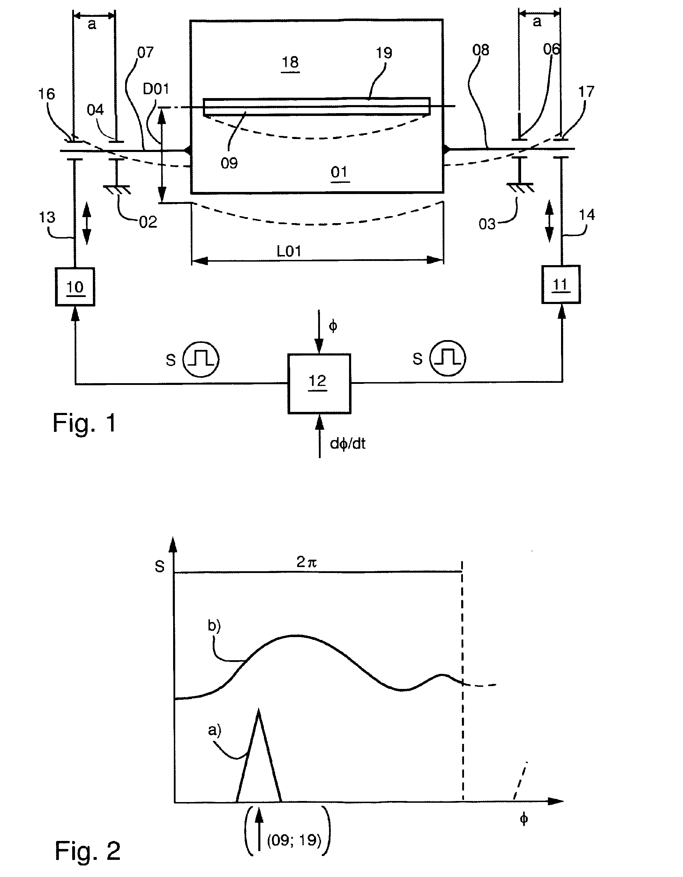

Während der Rotation können ungewünschte Schwingungen des Zylinders 01, insbesondere Biegeschwingungen, auftreten, welche z. B. durch Unrundheiten, Unsymmetrien oder aber durch Abrollen auf einem weiteren rotierenden Bauteil - ggf. ebenfalls mit einer Unsymmetrie behaftet - verursacht sein können. Insbesondere stellen z. B. ein oder mehrere axial auf der Mantelfläche verlaufende Kanäle 09 für die Befestigung von nicht dargestellten Aufzügen, oder aber Stöße von Aufzugenden, während der Rotation periodisch auftretende Störungen 09 dar, welche den Zylinder 01 zu den unerwünschten Schwingungen anregt. Den genannten Störungen 09 gemeinsam ist, dass diese für eine bekannte, stationäre Betriebssituation in gleicher oder zumindest ähnlicher Weise und Größenordnung auftreten. Eine Momentaufnahme des Zylinders 01 z. B. am Wendepunkt der Schwingung ist stark überzeichnet in Fig. 1 strichliert dargestellt.

Zur Verminderung der unerwünschten Schwingungen ist dem Zylinder 01 mindestens ein Aktuator 10; 11 zugeordnet, mittels welchem der Schwingung entgegengewirkt werden kann. Der Aktuator 10; 11 wird hierzu mit Signalen S beaufschlagt, deren Abfolge und/oder deren Höhe in einer Abhängigkeit von einer Drehwinkellage Φ des rotierenden Bauteils vorgehalten wird. Die Drehwinkellage Φ des Zylinders 01 ist z. B. entweder aus einer nicht dargestellten Maschinensteuerung oder durch einen nicht dargestellten, den Zylinder 01 antreibenden winkelgeregelten Elektromotor bekannt, oder aber sie wird mittels eines Sensors am Zylinder 01 ermittelt.

Fig. 2 zeigt beispielhafte Darstellungen für den Verlauf und die Höhe der z. B. in einer Steuer- bzw. Speichereinrichtung 12 (oder in einer Schaltung) hinterlegten bzw. vorgehaltenen Signale S in Abhängigkeit von der Drehwinkellage Φ. Die dargestellte, und sich periodisch wiederholende Periodenlänge kann bei Vorliegen einer einzigen Störung 09 beispielsweise eine Umdrehung (2π bzw. 360°) in Umfangsrichtung, oder bei mehreren, symmetrisch angeordneten, vergleichbaren Störungen 09 z. B. ein ganzzahliger Teil der Umdrehung (z. B. 180°, 120° etc.) sein. Der Aktuator wird während einer stationären Betriebssituation periodisch wiederkehrend mit der vorgehaltenen Abfolge bzw. Höhe des Signals S beaufschlagt. Die Abhängigkeit S(Φ) kann als diskrete Impulse (a) oder als innerhalb einer Periode stetig verlaufende Funktion (b) hinterlegt sein. Vorteilhaft ist es, wenn eine Beaufschlagung mit einer veränderlichen Kraft erfolgt, indem mindestens ein Zapfen 04; 06 des rotierenden Bauteils 01; 18 wenigstens einmal je Umdrehung mit einem entsprechenden Kraftimpuls gezielt beaufschlagt wird. Das Signal S ist direkt mit der Drehwinkellage Φ korreliert. Für unterschiedliche Betriebssituationen, wie z. B. verschiedene Drehzahlbereiche, unterschiedliche Aufzüge oder andere die Charakteristik bestimmende Größen, können verschiedene Abhängigkeiten hinterlegt sein. So können beispielsweise in der Nähe von Drehzahlen der Resonanzfrequenz der Anregung des Zylinders 01 höhere Niveaus gefordert sein als in anderen Bereichen. Diese Abhängigkeiten können auch mathematisch miteinander verbunden oder in anderer Weise erzeugbar sein. So kann für annähernd dieselben Konfigurationen der Verlauf zwar gleich, die absolute Höhe jedoch mit der vorliegenden Winkelgeschwindigkeit dΦ /dt, als Offset oder spreizend, korreliert sein.

Im Ausführungsbeispiel nach Fig. 1 wirkt jeweils ein Aktuator 10; 11 auf jeweils einen der Zapfen 07; 08, indem eine Koppel 13; 14 z. B. den Zapfen 07; 08 über ein Lager 16; 17 umfaßt. In vorteilhafter Ausführung greift die Koppel 13; 14 an einem Teil der Zapfen an, welcher auf der vom Zylinder 01 abgewandten Seite des Lagers 04; 06 über dieses hinausragt. Über die Steuereinrichtung 12 wird nun dem strichliert dargestellten Verlauf des Zylinders 01 und Zapfen 07; 08 entgegengewirkt, in dem in geeigneten Drehwinkellagen Φ entsprechende Signale S, oder kontinuierlich mit einem stetigen Verlauf, der Aktuator 10; 11 eine Gegenkraft (positiv oder negativ) auf den Zapfen aufbringt. Das Signal beinhaltet die Höhe und, wenn erforderlich, die Richtung der durch den Aktuator aufzubringenden Gegenkraft. Die Lager 04; 06 stellen für die Zapfen 07; 08 eine Klemmstelle dar. Über den einen Hebelarm darstellenden Teil des Zapfens 07; 08 wird ein Biegemoment in den Zylinder 01 eingeleitet. Es kann zwar prinzipiell ein Aktuator 10; 11 für den Zylinder 01 ausreichend sein, vorteilhaft ist jedoch die Anordnung von zwei Aktuatoren 10; 11, jeweils im Bereich eines Zapfens 04; 06.

Der Aktuator 10; 11 kann insbesondere als Piezoelement 10; 11 ausgeführt sein. Das Signal S steuert hier beispielsweise die Spannung aus einer nicht dargestellten Spannungsquelle, welche am Piezoelement 10; 11 anzuliegen hat. Anstelle des Signals S kann dem Aktuator auch direkt eine entsprechende Spannung zugeführt werden, welche in diesem Fall bereits durch die Steuereinrichtung 12 bereitgestellt wird. Als Aktuatoren 10; 11 kommen jedoch auch andere Einrichtungen, z. B. auf Magnetkraft basierende oder hydraulische Einheiten in Frage.

Je Umdrehung des Zylinders 01 wird der bzw. werden die Zapfen 07; 08 des Zylinders 01 zumindest einmal mit einer äußeren Kraft bzw. einem Kraftimpuls gezielt beaufschlagt oder erfahren zumindest einmal je Umdrehung eine Änderung in der von außen gezielt aufgebrachten Kraft.

Der Zylinder 01, z. B. als Formzylinder 01, wirkt z. B. mit einem zweiten rotierenden Bauteil 18, beispielsweise einem zweiten Zylinder 18 wie z. B. einem Übertragungszylinder 18, zusammen, welcher ebenfalls eine oder mehrere axial verlaufende Störungen 19 auf seiner Mantelfläche aufweisen kann. Er kann jedoch auch ohne Störung 19 ausgeführt sein. Die Ansteuerung der Aktuatoren 10; 11 erfolgt nun beispielsweise in der o. g. Weise derart, dass insbesondere auch die Anregung der Schwingung beim Durchgang der Störungen 09; 19 gedämpft wird. Beim Durchgang kann z. B. gleichzeitig ein entsprechender Impuls über das Signal S auf den Zapfen 07; 08 gegeben werden. Ein großer Vorteil an dieser Verfahrensweise ist, dass das Signal S bzw. die Gegenkraft vorgehalten wird, und daher zum Zeitpunkt der Anregung einer potentiellen Schwingung die Gegenkraft oder ein Stellweg bereits beaufschlagbar ist. Es wird nicht erst eine negative Auswirkung gemessen um eine geeignete Reaktion einzuleiten.

Die Zylinder 01; 18 sind z. B. zum An- bzw. Abstellen bzw. zur Variation der Anstellung in allen Beispielen vorzugsweise bzgl. ihrer Rotationsachsen im Abstand zueinander veränderbar gelagert. Hierzu ist mindestens einer der Zylinder, z. B. der Zylinder 01 z. B. in den als Exzenterlager 04; 06 ausgeführten Lagern 04; 06 gelagert. Er kann jedoch auch schwenkbar an Hebeln oder auch in einer Linearführung geführt sein.

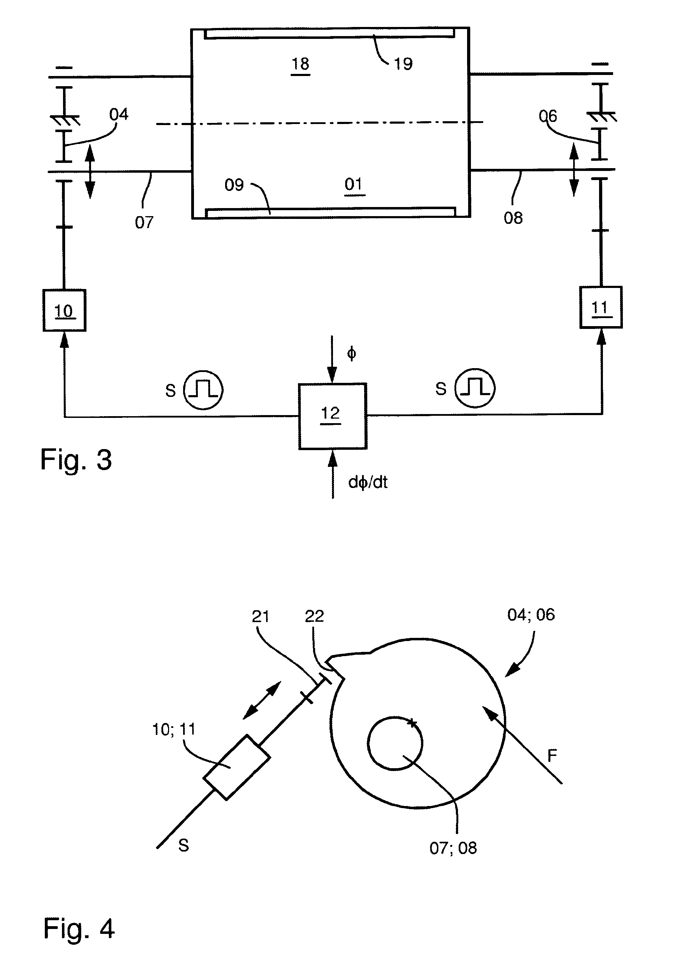

In einem zweiten Ausführungsbeispiel (Fig. 3) ist der Zylinder 01 bewegbar gelagert. Der Aktuator 10; 11 greift z. B. am Lager 04; 06 selbst an, welches entweder im Seitengestell 02; 03 bewegbar, oder aber beispielsweise als Exzenterlager (z. B. Drei- oder Vierringlager) ausgeführt ist. Durch den Aktuator 10; 11 ist der Zylinder 01 entsprechend der Signale S in einer Bewegungsrichtung verschiebbar, welche im wesentlichen senkrecht zur Rotationsachse des Zylinders 01 steht. Die Bewegung weist zumindest eine Komponente zu einem zusammen wirkenden Zylinder 18 hin, bzw. von diesem weg, auf. Der Zylinder 01, z. B. als Formzylinder 01, wirkt z. B. wieder mit dem zweiten Zylinder 18 zusammen, welcher keine, eine oder mehrere Störungen 19 auf seiner Mantelfläche aufweist. Die Ansteuerung der Aktuatoren 10; 11 erfolgt wie bereits für das erste Ausführungsbeispiel dargelegt. Hierbei kann das Signal S eine Information über den Stellweg enthalten. Eine Anregung beim Durchgang der Störung und/oder ein "Nachschwingen" des Zylinders 01 kann so, je nach hinterlegtem Verlauf des Signals S, wirksam vermindert werden.

In einer Ausführungsvariante (Fig. 4) wirkt der Aktuators 10; 11 nicht direkt auf den Zylinder 01 bzw. dessen Zapfen 07; 08, sondern auf einen eine Druck-An-Stellung begrenzenden Anschlag 21, welcher je nach Zustand des Aktuators 10; 11 die Bewegung des Zylinders 01 in den Grenzen des durch das Signals S vorgegebenen Stellweges erlaubt. Der Gegenanschlag 22 wird i. d. R. in Druck-An-Stellung z. B. mittels eines das Lager 04; 06 verdrehenden Stellmittels mit einer Kraft F, z. B. mittels eines nicht dargestellten Druckmittelzylinders an den Anschlag 21 gestellt. So kann beispielsweise bei Durchgang der Störung 09; 19 eine Entlastung durch Ausfahren des Anschlages 21 entgegen der erfolgen, und so die Anregung der Schwingung gedämpft bzw. unterdrückt werden. Im Beispiel ist der Anschlag 21 zwar in Verbindung mit einem Exzenterlager 04; 06 dargestellt, die Verfahrensweise ist jedoch in der gleichen Weise auf Linearlager oder Lager in verschwenkbaren Hebeln zu übertragen.

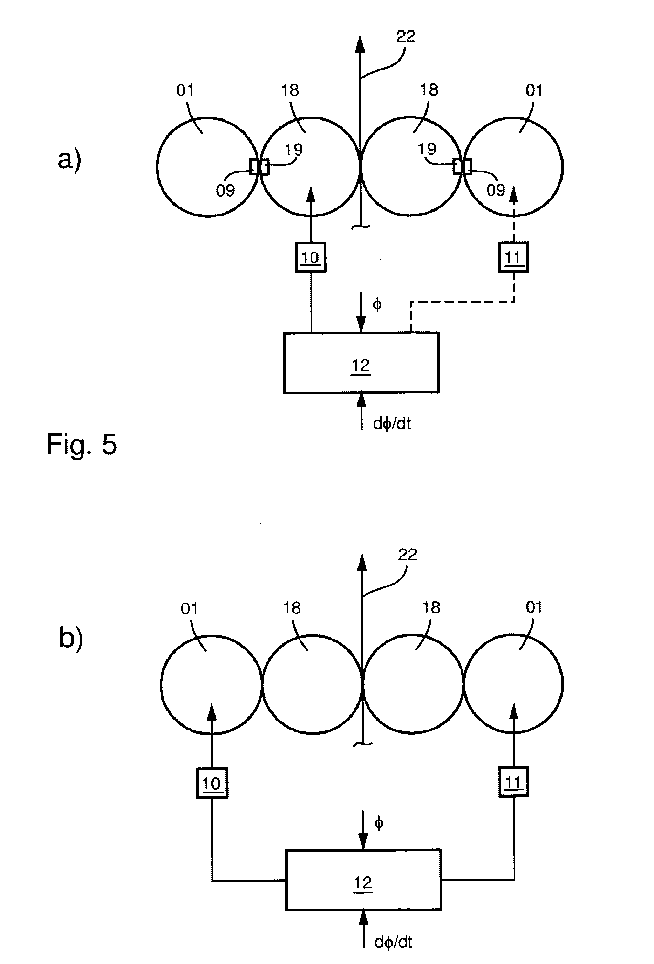

Von großem Vorteil ist, wie in Fig. 5 dargestellt, der Einsatz der beschriebenen Verfahrensweise in Druckeinheiten, wobei zwei Paare, jeweils ein Formzylinder 01 und ein Übertragungszylinder 01 eine Doppeldruckstelle für eine zwischen den Übertragungszylindern 18 hindurchgeführte und zu bearbeitende Bahn 23, z. B. eine zu bedruckende Bedruckstoffbahn 23, bilden. Die Zylinder 01; 18 weisen beispielsweise alle einen Umfang auf, welcher im wesentlichen der Länge einer Druckseite, z. B. Zeitungsseite, entspricht. Die Länge L01 der Ballen entspricht z. B. im wesentlichen der vierfachen Breite von vier nebeneinander angeordneten Druckseiten, z. B. Zeitungsbreiten. In diesem Fall weisen die Zylinder 01 und/oder 18 in Umfangsrichtung jeweils einen Kanal 09 und/oder 19 auf. Die Abmessungen der Zylinder 01; 18 können jedoch auch derart sein, dass in Umfangsrichtung im wesentlichen zwei Längsseiten, und in Längsrichtung sechs oder gar acht Seitenbreiten einer Druckseite, z. B. Zeitungsseite, anordenbar sind. In diesem Fall können beispielsweise zwei Kanäle 09 und/oder 19 am Umfang der Zylinder 01 und/oder 18 angeordnet sein.

Wie in Fig. 5 a) dargestellt, ist bereits die Ausrüstung und die entsprechende Verfahrensweise für einen der Übertragungszylinder 18 denkbar, um wirksam die Schwingungen im Bereich der Druckstelle zu vermindern. Es wird erreicht, dass zumindest die Anregungen in unmittelbarer Nähe zur zu bedruckenden Bahn 23 vermindert werden. Die Phase der Störungen 09; 19 ist derart angeordnet, dass die benachbarten Störungen 09; 19 jeweils aufeinander abrollen.

In Fig. 5, a) ist strichliert eine vorteilhafte Variante dargestellt, wobei ein Formzylinder 01 und ein Übertragungszylinder 18 in der entsprechenden Verfahrensweise betrieben werden. Die Ausführung mit Aktuator 10; 11 ist bevorzugt an nichtbewegten Zylindern 01; 18 angeordnet.

Sind lediglich an den Formzylindern 18 derartige Störungen 19 vorhanden, oder ist beabsichtigt, in der Hauptsache die Schwingungen an der Nippstelle zwischen Form- 01 und Übertragungszylinder 18 zu vermindern, so ist es von Vorteil sein, lediglich die beiden Formzylinder 18 mit der beschriebenen Vorrichtung auszuführen und in der genannten Verfahrensweise zu betreiben (Fig. 5 b)). In diesem Fall kann ggf. am Formzylinder 01 die Gegenkraft überhöht werden, um ein paralleles Schwingen der beiden zusammenwirkenden Zylinder 01; 18 zu erreichen.

Vorteilhaft ist die Anordnung an Zylindern 01; 18, welche nicht zur An- und Abstellung bewegt werden müssen. Es ist jedoch aber auch möglich, beispielsweise lediglich die beiden Übertragungszylinder 18, oder auch alle Zylinder 01; 18 mit der Vorrichtung auszuführen.

Die anhand einer Gummi-gegen-Gummi-Druckeinheit dargestellten Lösungen sind selbstverständlich auch auf Druckeinheiten anzuwenden, welche einen Satellitenzylinder aufweisen, wie z. B. Neunzylinder- oder Zehnzylinder-Druckeinheiten.

Die Verfahrensweise ist auch auf andere Bearbeitungsmaschinen anwendbar, in welchen mittels rotierender Bauteile Materialien möglichst exakt transportiert und/oder bearbeitet werden sollen. Insbesondere ist die Verfahrensweise und die Vorrichtung von Vorteil, wenn das rotierende Bauteil 01 auf seiner Mantelfläche eine Störung 09; 19, eine Unwucht aufgrund von Fertigung oder Unsymmetrien aufweist, und/oder mit einem zweiten Rotationskörper 18 zusammenwirkt, welcher eine der genannten Eigenschaften aufweist.

### Die Verfahrensweise für das gesamte Verfahren ist wie folgt:

Zunächst wird ein Verlauf der unerwünschten Schwingung in Abhängigkeit von der Drehwinkellage Φ für eine bestimmte Konfigurierung und/oder Betriebsweise bestimmt. Dies kann durch einen zusätzlichen, jedoch nicht dargestellten Sensor erfolgen. In einer vorteilhaften Ausführung findet der Aktuator 10; 11 gleichzeitig als Sensor Verwendung, wie die z. B. im Falle eines Piezoelementes 10; 11 möglich ist.

Anschließend wird empirisch und/oder durch theoretische Ableitung mit Hilfe dieser Abhängigkeit ein von der Drehwinkellage Φ abhängiger Verlauf einer geeigneten Gegenkraft bzw. eines Stellweges in der Weise ermittelt, dass die Anregung selbst und/oder die Schwingung wirksam unterdrückt wird. Für diese Betriebsweise wird der Verlauf der Schwingung selbst und/oder der Verlauf der ermittelten Gegenkraft bzw. des Stellweges in der Speichereinheit 12 abgelegt. Der Verlauf für die Beaufschlagung ist somit vorbestimmt und während des Betriebes weitgehend unabhängig von die Schwingung charakterisierenden Messwerten, sondern letztlich nur von der Drehwinkellage Φ.

Der ermittelte Verlauf bzw. die Höhe kann nun auch für andere Betriebsweisen bzw. Konfigurationen verwendet werden, wenn die Toleranzen im fertigen Produkt, der Maschinenbelastung etc. dies zulassen. Das rotierende Bauteil wird während dieser vergleichbaren stationären Betriebssituationen periodisch wiederkehrend mit den gewonnenen und vorgehaltenen Signalen entsprechend dem Verlauf der ermittelten Gegenkraft bzw. des Stellweges beaufschlagt.

Im anderen Fall wird der geschilderte Vorgang für verschiedene praxisrelevante Betriebsweisen/Konfigurationen durchgeführt, und die entsprechende Abhängigkeit S(Φ) zusammen mit den die Betriebsweise/Konfiguration charakterisierenden Größen abgelegt. Diese Abhängigkeiten S(Φ) können für die gewünschte Produktion jeweils abgerufen und in der beschriebenen Weise zur Verminderung der Schwingungen eingesetzt werden.

Für die Verfahrensweise während der Produktion ist somit keine ständige Ermittlung aktueller Größen zur Charakterisierung der Schwingung unbedingt erforderlich. Die Verfahrensweise arbeitet schnell und effektiv, da die zu ergreifende Maßnahme bereits vor Eintritt des Ereignisses (Störung, Schwingung) vorgehalten wird.

In einer von der genannten Ausführung verschiedenen Ausführung kann jedoch die erforderliche Amplitude und/oder die Phase (bzw. der Zeitpunkt) für die Aufbringung des Signals S (für die zu beaufschlagenden Kraft bzw. des Kraftimpulses bzw. die zeitliche Abfolge) in Abhängigkeit zu einer von der Drehwinkellage Φ verschiedenen Meßgröße, z. B. einer aktuellen Weg- oder Kraftmessung am Zylinder 01 oder dessen Zapfen 04; 06, erfolgen. Es kann auch eine gemischte Form des Verfahrens vorteilhaft sein, wobei zwar ein Grundmuster und eine Basiskraft anhand vorgehaltener, z. B. winkellageabhängiger, Daten vorgegeben, jedoch eine Anpassung von Höhe und Zeitpunkt anhand anderer ermittelter Meßwerte vorgenommen wird. Ein System, welches auf vorgehaltenen Signalen S bzw. Abfolgen beruht, kann auch zusätzlich selbstlernend und/oder adaptiv ausgeführt sein. Hierbei nutzt das System auf der einen Seite die zuverlässige und schnelle Methode des "Steuerns", und zwar bevor eine Messung des Fehlers und erst darauf hin eine Reaktion erfolgt, Verbesserungen des Algorithmus bzw. der vorgehaltenen Signale S bzw. Abfolgen und/oder Höhen können jedoch einfließen. Hierzu wird beispielsweise die Schwingung über eine Messung kontinuierlich oder in bestimmten Zyklen ermittelt, und die hinterlegten Parameter für die Signale S verändert bzw. ergänzt.

In einer vorteilhaften, weil einfachen Ausführung wird je auf dem Zylinder 01; 18 in Umfangsrichtung angeordnetem Kanal pro Umdrehung lediglich eine äußere Anregung, d. h. ein Signal S bzw. ein Kraftimpuls (z. B. puls-, rampen-, dreiecks- oder deltaförmig) dem Zylinder 01; 18 bzw. den Zapfen 04; 06 aufgeprägt. Die durch diesen einen Kraftimpuls (pro Kanal und pro Umdrehung) angeregte Schwingung bildet eine negative Interferenz zur durch den Kanal 09; 19 bzw. eine Unterbrechung 09; 19 angeregte Schwingung wenn die relative Winkellage Φ zwischen Kanalanregung und äußerem Kraftimpuls geeignet gewählt und die Amplitude entsprechend ist.

Da auf den Zylinder 01; 18 durch die Pressung der Gummitücher eine Streckenlast aufgebracht wird unter der sich die Zylinder 01; 18 verbiegen sind in vorteilhafter Ausführung durch die zusätzlichen Lager 16; 17, die Stützlager 16; 17, die außerhalb der Lager 04 sitzen, Kräfte eingebracht, die eine Gegenbiegung initiieren und so die gesamte Durchbiegung reduzieren. Da die Streckenlast im Moment der Kanalüberrollung kurzzeitig wegfällt (oder zumindest vermindert ist), sollte die Kraft, die die außenliegenden Lager 16 auf die Zapfen 07; 08 einbringen, in diesem Zeitfenster auch wegfallen (bzw. zurückgenommen werden), da sonst ein Überschwingen des Zylinders 01; 18 die Folge wäre. Durch die gesteuerte Einbringung der Biegekräfte auf die Zapfen 07; 08 während der Kanalüberrollung kann die Ursache des Schwingens, der Kanalschlag (d. h. der Wegfall des durch das Gummituch ausgeübten Biegemoments), zum Teil kompensiert werden kann. Die Kraftsteuerung muß in vorteilhafter Ausführung in einem Zeitfenster erfolgen, das in etwa der Dauer der Kanalüberrollung entspricht. Eine Alternative hierzu wäre wie in Fig. 2b) bereits genannt das Aufbringen von "Gegenschwingungen" zu den Schwingungen des Zylinders 01; 18. (Bekämpfung der Symptome). Ein Vorteil bei dieser Variante ist es jedoch für die Aktuatorik, dass die Kraftsteuerung nicht derart hochdynamisch erfolgen muß, da das relevante Zeitfenster dann durch die Schwingfrequenz des Zylinders 01; 18 und nicht durch die kurze Zeit der Überrollung gegeben ist.

Besonders für Zylinder 01; 18, deren Verhältnis zwischen Länge L01 und Durchmesser D01 von 6 bis 12, insbesondere zwischen 7 und 11 liegen ist die Ausführung von Vorteil, wobei in axialer Richtung des Zapfens 07; 08 ein Abstand a von der Mitte des Lagers 04; 06 bis Mitte Lager 16; 17 ca. 100 bis 230 mm beträgt. Für Durchmesser (zumindest im Bereich des Angriffspunktes der Lager 16; 17) des Zapfens 07; 08 von 55 bis 65 mm liegt der Abstand bevorzugt bei 125 bis 175 mm während er für Durchmesser von 65 bis 75 mm z. B. bei 150 bis 230 mm liegt. Der Zapfen 07; 08 wird während des Impulses mit einer Maximalkraft von z. B. 5 bis 15 kN, insbesondere 7,5 bis 11 kN beaufschlagt. Eine Bewegung des Stützlagers 16; 17 liegt vorteilhaft bei 25 bis 100 µm, für Durchmesser von 55 bis 65 mm z. B. bei 45 bis 100 µm, insbesondere bei ca. 60 µm, und für Durchmesser von 65 bis 75 mm z. B. bei 25 bis 80 µm.

Die Einleitung dieser Kraft kann nun in zwei unterschiedlichen Varianten erfolgen: So kann die Kraft während der Dauer des Drehens ohne Störung (keine Überrollung) durchgehend aufgebracht, und damit die Gegenbiegung erzeugt sein. Dies kann über den Aktuator selbst in "positiver" Richtung, oder aber über eine entsprechende mechanische Vorspannung erfolgen. Diese Kraft wird dann im Zeitfenster der Überrollung kurzzeitig zurückgenommen bzw. ausgeschaltet, was im ersten Fall durch Zurücknahme am Aktuator selbst und im zweiten Fall durch Entgegenwirken des Aktuators gegen die Vorspannung erreichbar ist. Hierdurch wird auch die statische Biegung reduziert.

Bei einer Rotationsgeschwindigkeit von 20.000 U/h (Umdrehungen pro Stunde) liegt das Zeitfenster für die Beaufschlagung bzw. Rücknahme z. B. bei 1,5 bis 5,0 ms, insbesondere bei 2,5 bis 4,0 ms. Bei 90.000 U/h liegt das Zeitfenster bei 0,3 bis 1,0 ms, insbesondere bei 0,6 bis 0,8 ms. Diese Zeitfenster stehen im Zusammenhang mit Breiten der Kanalöffnung auf der Mantelfläche in Umfangsrichtung von 1 bis 3 mm. Für doppelt so breite Öffnungen sind die Zeitfenster etwa Faktor zwei, für viermal so breite Öffnungen ca. Faktor vier größer.

In vorteilhafter Ausführung ist der Aktuator 10; 11 samt Steuer- bzw. Speichereinrichtung 12 und Energieversorgung derart ausgeführt, dass eine Kraft von z. B. 7,5 bis 11 kN bei einer Wegstrecke z. B. bei 25 bis 100 µm, aufbringbar ist. Bevorzugt wird hierfür ein piezoelektrisches System, wobei der Aktuator 10; 11 wie o. g. als Piezoelement 10; 11 ausgeführt ist.

### Bezugszeichenliste

- 01: rotierendes Bauteil, Zylinder, Formzylinder
- 02: Seitengestell
- 03: Seitengestell
- 04: Lager
- 05: -
- 06: Lager
- 07: Zapfen
- 08: Zapfen
- 09: Störung, Kanal, Unterbrechung
- 10: Aktuator, Piezoelement
- 11: Aktuator, Piezoelement
- 12: Steuereinrichtung
- 13: Koppel
- 14: Koppel
- 15: -
- 16: Lager
- 17: Lager
- 18: rotierendes Bauteil, Zylinder, Übertragungszylinder
- 19: Störung, Kanal
- 20: -
- 21: Anschlag
- 22: Gegenanschlag
- 23: Bahn, Bedruckstoffbahn

- a: Abstand (04, 16; 06, 18)
- D01: Durchmesser (01)
- L01: Länge (01)

- F: Kraft
- S: Signal

- Φ: Drehwinkellage
- dΦ/dt: Winkelgeschwindigkeit

## Patentansprüche

1. Verfahren zur Verminderung unerwünschter Biegeschwingungen an mindestens einem rotierenden Bauteil (01; 18) einer Bearbeitungsmaschine mit mindestens einem mit Signalen (S) beaufschlagbaren Aktuator (10; 11), mittels welchem einer unerwünschten Schwingung entgegengewirkt wird, wobei der Aktuator (10; 11) zumindest mittelbar auf einen in einem Seitengestell (02; 03) gelagerten Zapfen (07; 08) des rotierenden Bauteils (01; 18) wirkt, **dadurch gekennzeichnet, dass** eine erforderliche Abfolge der Signale (S) und/oder deren Höhe in einer Abhängigkeit von der Drehwinkellage (Φ) des rotierenden Bauteils vorgehalten wird, und dem Aktuator (10; 11) in Abhängigkeit von der Drehwinkellage (Φ) derart beaufschlagt wird, dass der Aktuator (10; 11) während einer stationären Betriebssituation periodisch wiederkehrend mit der vorgehaltenen Abfolge und/oder Höhe des Signals (S) beaufschlagt wird.

2. Verfahren nach Anspruch 1, **dadurch gekennzeichnet, dass** das Signal (S) die Höhe und die Richtung einer durch den Aktuator (10; 11) aufzubringenden oder zu ändernden Gegenkraft beinhaltet.

3. Verfahren nach Anspruch 1, **dadurch gekennzeichnet, dass** das Signal (S) die Größe und die Richtung eines erforderlichen Stellweges beinhaltet.

4. Verfahren nach Anspruch 1, **dadurch gekennzeichnet, dass** der Aktuator (10; 11) in Abhängigkeit seines Zustandes die Lage des Zapfens (07; 08) innerhalb einer Ebene senkrecht zur Rotationsachse des rotierenden Bauteils (01; 18) verändert.

5. Verfahren nach Anspruch 1, **dadurch gekennzeichnet, dass** die Periodenlänge der Abfolge der Signale (S) einer vollen Umdrehung des rotierenden Bauteils (01; 18) oder einem Quotienten aus einer Umdrehung und einer ganzen Zahl entspricht.

6. Verfahren nach Anspruch 1, **dadurch gekennzeichnet, dass** einer unerwünschten Schwingung entgegengewirkt wird, indem eine Beaufschlagung mit einer veränderlichen Kraft erfolgt, dass mindestens ein Zapfen (04; 06) des rotierenden Bauteils (01; 18) wenigstens einmal je Umdrehung mit einem Kraftimpuls gezielt beaufschlagt oder eine Vorspannung gezielt entlastet wird.

7. Verfahren nach Anspruch 2, **dadurch gekennzeichnet, dass** die Gegenkraft bzw. deren Änderung als diskreter Impuls oder mehrere diskrete Impulse aufgebracht werden.

8. Verfahren nach Anspruch 2, **dadurch gekennzeichnet, dass** die Gegenkraft bzw. deren Änderung als innerhalb einer Periode stetig verlaufende Funktion aufgebracht wird.

9. Verfahren nach Anspruch 2, **dadurch gekennzeichnet, dass** zur Änderung der Gegenkraft mittels des Signals (S) eine Entlastung einer vorliegenden Vorspannung erfolgt.

10. Verfahren nach Anspruch 2 oder 3, **dadurch gekennzeichnet, dass** die Gegenkraft und/oder der Stellweg direkt mit der Drehwinkellage (Φ) korreliert wird.

11. Verfahren nach Anspruch 1, **dadurch gekennzeichnet, dass** als Aktuator (10; 11) bzw. Sensor ein Piezoelement (10; 11) verwendet wird.

12. Verfahren nach Anspruch 1, **dadurch gekennzeichnet, dass** mindestens ein Zapfen (04; 06) des rotierenden Bauteils (01; 18) wenigstens einmal je Umdrehung mit einem Kraftimpuls gezielt beaufschlagt oder eine Vorspannung gezielt entlastet wird.

13. Verfahren nach Anspruch 5 oder 12, **dadurch gekennzeichnet, dass** der Zapfen (07; 08) mit einem von außen aufgeprägter Kraftimpuls bzw. Entlastung zusätzlich zu den durch die Schwingung hervorgerufenen Kräften bzw. die Schwingung bedingenden Impulsen beaufschlagt wird.

14. Verfahren nach Anspruch 5 oder 12, **dadurch gekennzeichnet, dass** je auf dem rotierenden Bauteil (01; 18) in Umfangsrichtung angeordneten Störung (09; 19) pro Umdrehung lediglich eine äußere Anregung, insbesondere in Form eines Kraftimpulses oder einer Entlastung, aufgeprägt wird.

15. Verfahren nach Anspruch 13 oder 14, **dadurch gekennzeichnet, dass** die Form und/oder Dauer des aufgeprägten Kraftimpulses bzw. der Entlastung einer Anregung nachempfunden wird, welche durch das Abrollen einer auf dem Umfang des Zylinders (01; 18) angeordneten Störung (09; 19) auf einem zweiten Zylinder (18, 01) entsteht.

16. Verfahren nach Anspruch 5 oder 12, **dadurch gekennzeichnet, dass** der Kraftimpuls bzw. die Entlastung dem Zapfen (04; 06) auf einer vom Zylinder (01; 18) abgewandten Seite eines die Zapfen (04; 06) aufnehmenden Lagers (04; 06) aufgeprägt wird.

17. Verfahren nach Anspruch 1, 5 oder 12 **dadurch gekennzeichnet, dass** das rotierende Bauteil (01; 18) als Zylinder (01) einer Druckmaschine ausgeführt ist.

18. Verfahren nach Anspruch 1, 5 oder 12 **dadurch gekennzeichnet, dass** das rotierende Bauteil (01; 18) als Zylinder (01) einer Bearbeitungsmaschine für bahnförmiges Gut ausgeführt ist.

19. Verfahren nach Anspruch 1, **dadurch gekennzeichnet, dass** zunächst ein Verlauf der unerwünschten Schwingung in Abhängigkeit von der Drehwinkellage (Φ) bestimmt und mit Hilfe dieser Abhängigkeit ein von der Drehwinkellage (Φ) abhängiger Verlauf einer aufzuprägenden oder zu ändernden Gegenkraft ermittelt wird, wobei der Verlauf der Schwingung und/oder der ermittelten Gegenkraft in einer Steuer- und/oder Speichereinrichtung (12) abgelegt und vorgehalten, und das rotierende Bauteil (01; 18) während einer stationären Betriebssituation periodisch wiederkehrend mit Signalen (S) entsprechend dem Verlauf der ermittelten und vorgehaltenen Gegenkraft beaufschlagt wird.

## Claims

1. Method for reducing undesired flexural vibrations in at least one rotating component (01; 18) of a processing machine comprising at least one actuator (10; 11) which can be supplied with signals (S) by means of which an undesired vibration is counteracted, the actuator (10; 11) acting at least indirectly on a journal (07; 08) of the rotating component (01; 18), which journal is mounted in a side frame (02; 03), **characterized in that** a required sequence of signals (S) and/or the height thereof is stored as a function of the angle of rotation (Φ) of the rotating component and is supplied to the actuator (10; 11) as a function of the angle of rotation (Φ) in such a way that the actuator (10; 11) is supplied periodically repeatedly with the stored sequence and/or height of the signal (S) during a stationary operating situation.

2. Method according to Claim 1, **characterized in that** the signal (S) comprises the height and the direction of an opposite force to be applied to the actuator (10; 11) or to be changed.

3. Method according to Claim 1, **characterized in that** the signal (S) comprises the magnitude and the direction of a required regulating distance.

4. Method according to Claim 1, **characterized in that** the actuator 10; 11, as a function of its state, changes the position of the journal (07; 08) within a plane perpendicular to the axis of rotation of the rotating component (01; 18).

5. Method according to Claim 1, **characterized in that** the period length of the sequence of the signals (S) corresponds to a complete revolution of the rotating component (01; 18) or a quotient of a revolution and an integer.

6. Method according to Claim 1, **characterized in that** an undesired vibration is counteracted by an application of a variable force so that, at least once per revolution, at least one journal (04; 06) of the rotating component (01; 18) is supplied in a targeted manner with a force pulse or an initial tension is relieved in a targeted manner.

7. Method according to Claim 2, **characterized in that** the opposite force or the change thereof is applied as a discrete pulse or a plurality of discrete pulses.

8. Method according to Claim 2, **characterized in that** the opposite force or the change thereof is applied as a function which is continuous within a period.

9. Method according to Claim 2, **characterized in that** an initial tension present is relieved for changing the opposite force by means of the signal (S).

10. Method according to Claim 2 or 3, **characterized in that** the opposite force and/or the regulating distance is directly correlated with the angle of rotation (Φ).

11. Method according to Claim 1, **characterized in that** a piezo element (10; 11) is used as the actuator (10; 11) or sensor.

12. Method according to Claim 1, **characterized in that,** at least once per revolution, at least one journal (04; 06) of the rotating component (01; 18) is supplied in a targeted manner with a force pulse or an initial tension is relieved in a targeted manner.

13. Method according to Claim 5 or 12, **characterized in that** the journal (07; 08) is supplied with an externally applied force pulse or relief in addition to the forces caused by the vibration or the pulses due to the vibration.

14. Method according to Claim 5 or 12, **characterized in that** only one external stimulation, in particular in the form of a force pulse or of a relief, is applied per revolution per fault (09; 19) arranged on the rotating component (01; 18) in the circumferential direction.

15. Method according to Claim 13 or 14, **characterized in that** the shape and/or duration of the applied force pulse or of the relief is modelled on a stimulation which results from the rolling of a fault (09; 19) arranged on the circumference of the cylinder (01; 18) on a second cylinder (18; 01).

16. Method according to Claim 5 or 12, **characterized in that** the force pulse or the relief is applied to the journal (04; 06) on that side of a bearing (04; 06) holding the journals (04; 06) which faces away from the cylinder (01; 18).

17. Method according to Claim 1, 5 or 12, **characterized in that** the rotating component (01; 18) is in the form of a cylinder (01) of a printing press.

18. Method according to Claim 1, 5 or 12, **characterized in that** the rotating component (01; 18) is in the form of a cylinder (01) of a processing machine for web-like material.

19. Method according to Claim 1, **characterized in that** first a variation of the undesired vibration as a function of the angle of rotation (Φ) is determined and, with the aid of this dependency, a variation, dependent on the angle of rotation (Φ), of an opposite force to be applied or to be changed is determined, the variation of the vibration and/or of the determined opposite force being deposited and stored in a control device and/or memory device (12), and the rotating component (01; 18) being supplied periodically repeatedly with signals (S) corresponding to the variation of the determined and stored opposite force during a stationary operating situation.

## Revendications

1. Procédé pour réduire des vibrations en flexion indésirables sur au moins un composant (01 ; 18) rotatif d'une machine d'usinage, avec au moins un actionneur (10 ; 11), susceptible d'être sollicité par des signaux (S), au moyen duquel on agit à l'encontre d'une vibration indésirable, l'actionneur (10 ; 11) agissant au moins indirectement sur un tourillon (07 ; 08), monté en palier dans un bâti latéral (02 ; 03), du composant (01 ; 18) rotatif, **caractérisé en ce qu'**une succession nécessaire des signaux (S) et/ou de leur hauteur est stockée en une relation de dépendance vis-à-vis de la position angulaire en rotation (Φ) du composant rotatif, et l'actionneur (10 ; 11) est sollicité en fonction de la position angulaire en rotation (Φ), de manière que l'actionneur (10 ; 11), pendant une situation de fonctionnement stationnaire, soit sollicité de manière périodiquement récurrente avec la succession et/ou la hauteur stockée du signal (S).

2. Procédé selon la revendication 1, **caractérisé en ce que** le signal (S) contient la hauteur et la direction d'une force antagoniste à appliquer ou à modifier, au moyen de l'actionneur (10 ; 11).

3. Procédé selon la revendication 1, **caractérisé en ce que** le signal (S) contient la valeur et la direction d'une course de réglage nécessaire.

4. Procédé selon la revendication 1, **caractérisé en ce que** l'actionneur (10 ; 11) modifie la position du tourillon (07 ; 08) dans un plan perpendiculaire à l'axe de rotation du composant (01 ; 18) rotatif, en fonction de son état.

5. Procédé selon la revendication 1, **caractérisé en ce que** la longueur de période de la succession des signaux (S) correspond à un tour de rotation complet du composant (01 ; 18) rotatif ou à un quotient entre un tour de rotation et un nombre entier.

6. Procédé selon la revendication 1, **caractérisé en ce que** l'on s'oppose à une vibration indésirable **en ce qu'**une sollicitation s'effectue avec une force variable, de manière qu'au moins une fois à chaque tour de rotation, un tourillon (04 ; 06) du composant (01 ; 18) rotatif soit sollicité à dessein au moins avec une impulsion de force, ou bien qu'une précontrainte soit déchargée à dessein.

7. Procédé selon la revendication 2, **caractérisé en ce que** la force antagoniste ou sa modification est appliquée sous forme d'impulsion discrète ou de plusieurs impulsions discrètes.

8. Procédé selon la revendication 2, **caractérisé en ce que** la force antagoniste ou sa modification est appliquée sous forme d'une fonction à évolution continue dans les limites d'une période.

9. Procédé selon la revendication 2, **caractérisé en ce qu'**une décharge d'une précontrainte existante est effectuée pour modifier la force antagoniste au moyen du signal (S).

10. Procédé selon la revendication 2 ou 3, **caractérisé en ce que** la force antagoniste et/ou la course de réglage est/sont en corrélation directe avec la position angulaire en rotation (Φ).

11. Procédé selon la revendication 1, **caractérisé en ce qu'**un piézoélément (10 ; 11) est utilisé comme actionneur (10, 11) ou capteur.

12. Procédé selon la revendication 1, **caractérisé en ce que,** à chaque tour de rotation, au moins un tourillon (04 ; 06) du composant (01 ; 18) rotatif est sollicité à dessein au moins une fois avec une impulsion de force, ou bien une précontrainte est déchargée à dessein.

13. Procédé selon la revendication 5 ou 12, **caractérisé en ce que** le tourillon (07 ; 08) est sollicité avec une impulsion de force ou une décharge, inculquée de l'extérieur, en plus des forces provoquées par la vibration, ou des impulsions conditionnant la vibration.

14. Procédé selon la revendication 5 ou 12, **caractérisé en ce que,** chaque fois sur le composant (01 ; 18) rotatif, une perturbation (09 ; 19) disposée en direction périphérique, par tour de rotation, est inculqué une excitation extérieure, en particulier se présentant sous la forme d'une impulsion de force ou d'une décharge.

15. Procédé selon la revendication 13 ou 14, **caractérisé en ce que** la forme et/ou la durée de l'impulsion de force inculquée et/ou de la décharge d'une excitation, produite(s) par le roulement sur un deuxième cylindre (18 ; 01) d'une perturbation (09 ; 19) disposée sur la périphérie du cylindre (01, 18), est/sont appréhendée(s).

16. Procédé selon la revendication 5 ou 12, **caractérisé en ce que** l'impulsion de force ou la décharge est inculquée au tourillon (04 ; 60) sur un côté, opposé au cylindre (01 ; 18), d'un palier (04 ; 06) supportant les tourillons (04 ; 06).

17. Procédé selon la revendication 1, 5 ou 12, **caractérisé en ce que** le composant (01 ; 18) rotatif est réalisé sous forme de cylindre (01) d'une machine à imprimer.

18. Procédé selon la revendication 1, 5 ou 12, **caractérisé en ce que** le composant (01 ; 18) rotatif est réalisé sous forme de cylindre (01) d'une machine d'usinage pour un produit en forme de bande.

19. Procédé selon la revendication 1, **caractérisé en ce que,** d'abord, on détermine une allure de le la vibration indésirable en fonction de la position angulaire en rotation (Φ) et, à l'aide de cette relation on détermine une allure, dépendant de la position angulaire en rotation (Φ), d'une force antagoniste à inculquer ou à modifier, l'allure de la vibration et/ou de la force antagoniste déterminée étant déposée et stockée dans un dispositif de commande et/ou de stockage (12) et, pendant un fonctionnement stationnaire, le composant (01 ; 18) rotatif est sollicité de manière périodiquement récurrente avec des signaux (S), de manière correspondant à l'allure de la force antagoniste déterminée et stockée.
